# EUROPÄISCHE PATENTSCHRIFT

(11) **EP 1 002 568 B1**
(45) Veröffentlichungstag und Bekanntmachung des Hinweises auf die Patenterteilung: **24.06.2009**
(21) Anmeldenummer: 99118323.7
(22) Anmeldetag: 15.09.1999
(51) Int. Cl.: B01F 13/00, A61C 5/06

(54) **Anordnung zum Anmischen von Mehrkomponentenmassen, insbesondere für Dentalzwecke**
Device for mixing multi-component masses, especially for dental use
Dispositif pour mélanger des masses multi-composants, en particulier à usage dentaire

(30) Priorität: 20.11.1998 DE 29820832 U
(43) Veröffentlichungstag der Anmeldung: 24.05.2000
(73) Patentinhaber: Ernst Mühlbauer GmbH & Co.KG, 25870 Norderfriedrichskoog (DE)
(72) Erfinder: Mühlbauer, Wolfgang, Dr., 22609 Hamburg (DE); Hörth, Hans, 21147 Hamburg (DE)
(74) Vertreter: Glawe, Delfs, Moll

(56) Entgegenhaltungen:
- EP-A- 0 747 114
- DE-U- 29 709 383
- US-A- 5 005 735
- US-A- 5 397 180

## Beschreibung

Die Erfindung bezieht sich auf eine Anordnung gemäß Anspruch 1 zum Anmischen von Mehrkomponentenmassen, insbesondere dentaltechnischen Abdruckmassen, die aus einer Komponentenauspreßeinrichtung und einem Mischer besteht. An die den Komponenten zugeordneten Auslaßöffnungen der Auspreßeinrichtung sind die Einlaßöffnungen eines Mischers anschließbar. Beispielsweise können dessen Einlaßöffnungen in der Form von Rohrzapfen ausgebildet sein, die außen zylindrisch oder ein wenig konisch sind und in die Auslaßöffnungen der Auspreßeinrichtung dicht einsteckbar sind. Die Außenflächen der Rohrzapfen und die Innenflächen der Auslaßöffnungen wirken als Führungsflächen für den Anschluß zusammen. Die Führungsflächen des einen Teils sind komplementär zu den Führungsflächen des anderen Teils ausgebildet.

Im Bereich der Öffnungen wirkt der Auspreßdruck, der dazu neigt, den Mischer von der Auspreßeinrichtung abzuheben. Es muß daher eine Einrichtung vorgesehen sein, die den Mischer entgegen dieser Kraft an die Auspreßeinrichtung andrückt. Damit der dichte Anschluß gewährleistet ist, muß diese Andruckeinrichtung hinreichende Kraft und Genauigkeit auf Dauer gewährleisten (EP-B-492 412). *Es ist bekannt (*US-A-5,397,180*, die eine Anordnung gemäß dem Oberbegriff des Anspruchs 1 offenbart) einen dichten Anschluß des Mischers an die Auspreßeinrichtung durch eine kräftige mechanische Andruckeinrichtung, wie z. B. einen* "*luer lock connecting ring", die bei hoher Kraftbelastung wie sie beim axialen Auspressen der Komponenten aus der Auspresseinrichtung in den Mischer auftritt, zu erreichen.* Es ist bekannt (DE 3237353 A1), die Öffnungen so anzuordnen, daß sie die Führungsflächen quer durchdringen. Die Öffnungen sind axial gegeneinander versetzt, um zu verhindern, daß im Einlaßbereich die beiden Komponenten in Berührung kommen und dort aushärten. In dieser Anordnung heben sich die in den Öffnungen wirkenden Druckkräfte nur teilweise gegenseitig auf.

Erfindungsgemäß münden die Öffnungen in diametraler Anordnung in einander gegenüberliegenden Flächenanteilen der Führungsflächen. Dabei heben sich die in den Öffnungen wirkenden Druckkräfte zum größten Teil auf. Die Halteeinrichtungen, die zur Sicherung der Verbindungsstellung der Öffnungen vorgesehen sind, werden nur durch diejenige Kraft belastet, die dem Druckabfall im Mischer entspricht. Innerhalb des Einlaßbereichs des Mischers ist weiterhin eine Wand vorgesehen, deren Ausdehnung so groß ist, daß die Grenze des Bereichs, in welchem die Aushärtung der Masse zu erwarten ist, hinreichend fern von den Aus- und Einlaßöffnungen liegt.

Wenn es sich um einen dynamischen Mischer handelt, ist diese Wand zweckmäßigerweise an derjenigen Endplatte des Mischers angeordnet, die die Lageröffnung für die Mischerwelle bildet. Wenn es sich um einen statischen Mischer handelt, kann ein Einsatz vorgesehen sein, der in das betreffende Ende des Mischergehäuses eingesetzt wird und an dem diese Wand angeordnet ist.

Die Anordnung ist zweckmäßigerweise symmetrisch zur Mittelachse des Mischers. Die Öffnungen münden seitlich quer zu dieser Achse.

Bei einer besonders vorteilhaften Ausführungsform der Erfindung definieren die einerseits an der Auspreßeinrichtung und andererseits am Mischer angeordneten Führungsflächen eine quer zur Mittelachse des Mischers sowie quer zu den Öffnungsmündungen verlaufende Einschubrichtung. Quer zu dieser Einschubrichtung (d. h. in Richtung der Mischermittelachse) sind sie formschlüssig miteinander verbunden.

Bei einer anderen Ausführungsform der Erfindung sind die Führungsflächen im wesentlichen zylindrisch und können durch einen Renkverschluß oder dergleichen in der verbundenen Stellung verriegelt werden.

Die Erfindung wird im folgenden näher unter Bezugnahme auf die Zeichnung erläutert, die vorteilhafte Ausführungsbeispiele veranschaulicht. Es zeigen:
- Fig. 1: einen Längsschnitt durch die Stirnplatte der Auspreßeinrichtung mit angeschlossenem Mischer,
- Fig. 2: einen vergrößerten Längsschnitt durch den Fußbereich des Mischers,
- Fig. 3 - 5: Querschnitte durch den Fußbereich verschiedener Ausführungsformen des Mischers,
- Fig. 6: eine Seitenansicht des Fußbereichs der Ausführungsform gemäß Fig. 5 und
- Fig. 7: einen Längsschnitt durch das Mundstück der Auspreßeinrichtung.

Die Stirnplatte 1 des Auspreßgeräts weist rückseitig kreisförmig angeordnete Ränder 2 auf, die Halterungsvertiefungen 3 für die vorderen Enden von zwei Kartuschen einfassen. Die Auslaßöffnungen der Kartuschen sind an zwei Kanäle 4, 5 in der Stirnplatte 1 anzuschließen, die in Auslaßkanälen 6, 7 eines plattenförmigen Mundstücks 8 diametral aufeinander zu gerichtet münden. In der Mitte des Mundstücks 8 befindet sich eine Ausnehmung 9 zur Aufnahme des Fußes 10 einer Mischdüse 11. Zu diesem Zweck ist die Ausnehmung 9 von Führungsflächen 12, 13 begrenzt, deren Abstand der Breite des Mischerfußes genau angepaßt ist und die mit Hinterschneidungen 14, 15 versehen sind.

In den Führungsflächen 12, 13 liegen die Mündungen 16, 17 der Kanäle 6, 7 genau an derjenigen Stelle, an der sich bei eingesetztem Mischerfuß 10 dessen Einlaßöffnungen 18, 19 befinden. Diese öffnen sich in Seitenflächen 20, 21, deren Form und Abmessungen genau denjenigen der Führungsflächen 12, 13 des Mundstücks 8 entsprechen und mit diesen als mischerseitige Führungsflächen zusammenwirken. Die Führungsflächen 12, 13 sowie 20, 21 umgeben die zugehörigen Öffnungen 16, 17 bzw. 18, 19 und dichten durch ihre gegenseitige Anlage im eingesetzten Zustand des Mischers diese Öffnungen nach außen hin ab.

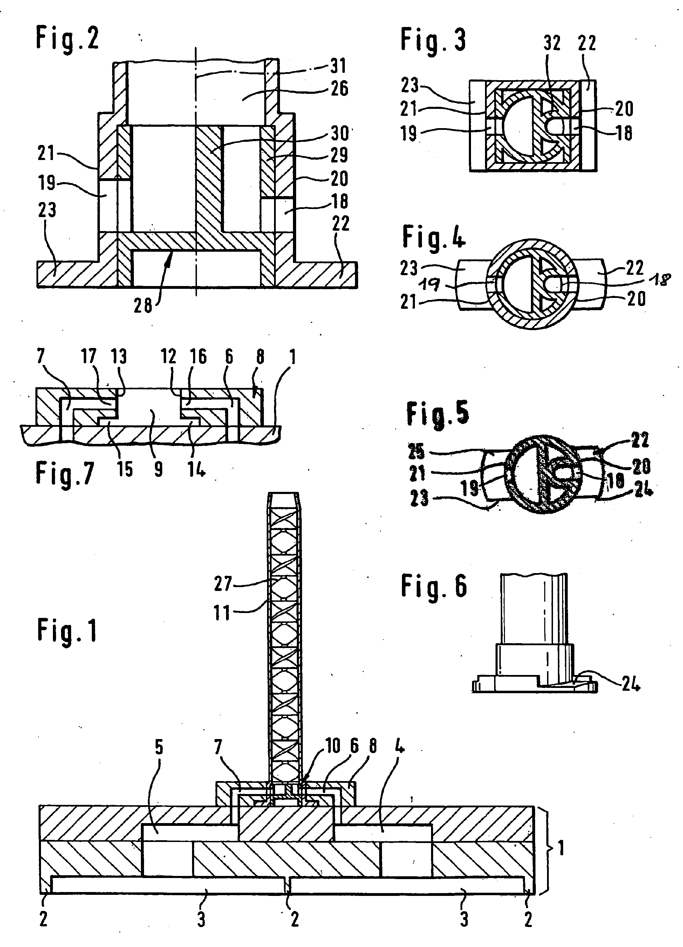

Der Sitz des Mischerfußes 10 in der Ausnehmung 9 des Mundstücks 8 wird dadurch gesichert, daß vom Mischerfuß seitlich vorspringende Flügel 22, 23 passend in die Hinterschneidungen 14, 15 der Ausnehmung 9 eingreifen. Die Flügel 22, 23 und die komplementär dazu geformten Hinterschneidungen 14, 15 können unterschiedliche Gestalt annehmen. Fig. 3 bis 6 veranschaulichen drei Ausführungsbeispiele. Im Ausführungsbeispiel gemäß Fig. 3 ist vorausgesetzt, daß die Mischerflügel beiderseits eines im Querschnitt quadratischen Mischerfußes vorspringen. Entsprechend sind die Führungsflächen 12, 13 der Ausnehmung 9 eben und parallel zueinander ausgebildet. Die Ausnehmung 9 ist in Richtung quer zur Zeichenebene (zum Betrachter der Fig. 7 hin) offen, so daß der Mischerfuß (vom Betrachter her) parallel zur Stirnplatte 1 in die Ausnehmung 9 eingeschoben werden kann. Die Einschubrichtung verläuft quer zur Zeichenebene bzw. zur Mittelachse 31. Die Ausnehmung 9 ist mit einer Anschlagfläche versehen, die die Einschub-Endlage des Mischerfußes bestimmt und so angeordnet ist, daß in dieser Endlage die Auslaßöffnungen 16, 17 genau mit den Einlaßöffnungen 18, 19 des Mischers fluchten.

Die Ausführungsbeispiele der Fig. 4 bis 6 setzen voraus, daß der Mischerfuß 10 (abgesehen von den Flügeln 22, 23) zylindrisch ausgebildet ist. Entsprechend sind die Führungsflächen 12, 13 der Ausnehmung 9 als Teile einer dazu passenden, zylindrischen Bohrungsfläche ausgebildet. Diese ist an zwei gegenüberliegenden Stellen, die zu den Auslaßöffnungen 16, 17 um 90° versetzt sind, für den Durchlaß der Flügel 22, 23 ausgeschnitten. Nachdem der Mischerfuß in die Ausnehmung 9 eingesetzt ist, wird er um 90° gedreht, bis die Flügel 22, 23 in den Hinterschneidungen 14, 15 liegen und die Auslaßöffnungen 16, 17 mit den Einlaßöffnungen 18, 19 des Mischerfußes fluchten. Die Flügel 22, 23 bilden in diesem Fall mit den entsprechenden Teilen des Mundstücks 8 einen Renkverschluß.

Dies gilt auch für das Ausführungsbeispiel gemäß Fig. 5 und 6. Dieses unterscheidet sich von demjenigen gemäß Fig. 4 dadurch, daß die Flügel 22, 23 etwas breiter sind und schräg verlaufende Keilflächen 24, 25 aufweisen, denen komplementäre Keilflächen in den Hinterschneidungen 14, 15 entsprechen. Wenn der Mischerfuß um 90° in diejenige Stellung gedreht wird, in der die Auslaß- und Einlaßöffnungen 16 bis 19 miteinander fluchten, bewirken diese Keilflächen eine zusätzliche Fixierung des Mischerfußes in Axialrichtung.

In allen Beispielen liegen die Auslaßöffnungen 16, 17 bzw. die Einlaßöffnungen 18, 19 symmetrisch zur Mittelachse 31 des Mundstücks 8 und des Mischers 11.

Der Mischerinnenraum 26, der bekannte Misch-Schikanen 27 enthalten kann, ist nach hinten durch einen Stopfen 28 geschlossen, dessen Seitenwand 29 der Form des Innenraums des Mischerfußes getreu angepaßt ist und darin in geeigneter Weise, durch Klebung, fixiert ist. Seine Seitenwände 29 werden von den Einlaßöffnungen 18, 19 durchquert. Zwischen diesen Öffnungen bildet der Stopfen 28 eine Trennwand 30, die dafür sorgt, daß die durch die Einlaßöffnungen 18, 19 in den Mischer eindringenden Ströme der Komponenten nicht in unmittelbarer Nähe der Einlaßöffnungen 18, 19 aufeinandertreffen können, sondern erst in einer gewissen Distanz davon. Dadurch wird dafür gesorgt, daß die bei diesen Öffnungen befindliche Masse auch nach normaler Zeitdifferenz zwischen der Abgabe aufeinanderfolgender Chargen noch fließfähig ist. Dies ist eine Voraussetzung dafür, daß der Mischer gewechselt werden kann und daß die nach dem Einsatz eines neuen Mischers in diesen einströmenden Komponenten die erforderliche Konsistenz haben.

Eine zweite Wand 32 kann den Einlaßraum des Mischers, der in den dargestellten Beispielen der Einlaßöffnung 18 zugeordnet ist, enger eingrenzen als den der anderen Einlaßöffnung 19 zugeordneten Einlaßraum. Dadurch wird nicht nur eine zusätzliche Trennung der Einlaufbereiche geschaffen, sondern kann auch der Einlaßwiderstand des Mischers passend zu unterschiedlichen Viskositäten der Kompomenten so variiert werden, daß die Auspreßkraft für die Komponenten trotz unterschiedlicher Viskosität etwa gleich ist.

Damit im Falle unterschiedlich gestalteter Auslaß- bzw. Einlaßöffnungen (wie z.B. in den dargestellten Ausführungsformen) der Mischer nicht verkehrt angesetzt werden kann, können die zueinander komplementären Führungsflächen 12, 13 bzw. 20, 21 oder die Flügel 22, 23 und die zugehörigen Durchlässe oder Hinterschneidungen 14, 15 unsymmetrisch ausgebildet sein.

## Patentansprüche

1. Anordnung zum Anmischen von Mehrkomponentenmassen, insbesondere für Dentalzwecke, bestehend aus einer Komponenten-Auspreßeinrichtung mit den Komponenten zugeordneten Auslaßöffnungen (16, 17) und einem Mischer (11), dessen Einlaßöffnungen (18, 19), die durch eine Wand (30) getrennt sind, an die Auslaßöffnungen (16, 17) der Auspreßeinrichtung anschließbar sind, wobei die Öffnungen (16 - 19) dieser beiden Teile von komplementären Führungsflächen (12, 13, 20, 21) beider Teile eingeschlossen sind, wobei die Öffnungen (16 - 19) diametral in einander gegenüberliegenden Flächenanteilen der Führungsflächen (12, 13, 20, 21) münden, **dadurch gekennzeichnet, daß** der Mischer (11) nach hinten durch einen Stopfen (28) geschlossen ist, dessen Seitenwand der Form des Innenraums des Mischerfußes getreu angepasst ist und der darin durch Klebung fixiert ist und die die Einlaßöffnungen (18, 19) trennende Wand (30) enthält.

2. Anordnung nach Anspruch 1, **dadurch gekennzeichnet, daß** die Wand (30) Teil eines in den Mischer einfügbaren Einsatzes (28) ist.

3. Anordnung nach Anspruch 1 oder 2, **dadurch gekennzeichnet, daß** die Führungsflächen (20, 21) des Mischers (11) zylindrisch ausgebildet sind und die Mittelachse der Flächenanteile mit der Mittelachse des Mischers (11) übereinstimmt.

4. Anordnung nach Anspruch 1 oder 2, **dadurch gekennzeichnet, daß** die Führungsflächen (12, 13, 20, 21) eine quer zur Mittelachse des Mischers verlaufende Einschubrichtung haben und in Richtung dieser Mittelachse formschlüssig verbunden sind.

5. Anordnung nach Anspruch 1 bis 3 , **dadurch gekennzeichnet, daß** die Führungsflächen (12, 13, 20, 21) im wesentlichen zylindrisch sind und durch einen Renkverschluß in der verbundenen Stellung verriegelbar sind.

## Claims

1. Arrangement for mixing multi-component compositions, in particular for dental purposes, comprised of a component-extruding device with outlet openings (16, 17) assigned to the components and a mixer (11), the inlet openings (18, 19) of which, which are separated by a wall (30), can be connected to the outlet openings (16, 17) of the extruding device, the openings (16 - 19) of these two parts being enclosed by complementary guiding surfaces (12, 13, 20, 21) of the two parts, wherein the openings (16 - 19) open out diametrically in mutually opposite surface portions of the guiding surfaces (12, 13, 20, 21), **characterized in that** the mixer (11) is closed to the rear by a plug (28), the side wall of which is truly fitted to the shape of the interior space of the mixer foot and which is fixed therein by gluing and contains a wall (30) separating the inlet openings (18, 19).

2. Arrangement according to Claim 1, **characterized in that** the wall (30) is part of an insert (28) which can be inserted into the mixer.

3. Arrangement according to Claim 1 or 2, **characterized in that** the guiding surfaces (20, 21) of the mixes (11) are formed cylindrically and that the centre axis of the surface portions coincides with the centre axis of the mixer (11).

4. Arrangement according to Claim 1 or 2, **characterized in that** the guiding surfaces (12, 13, 20, 21) have a pushing-in direction running transversely with respect to the centre axis of the mixer and are positively connected in the direction of this centre axis.

5. Arrangement according to Claim 1 to 3, **characterized in that** the guiding surfaces (12, 13, 20, 21) are essentially cylindrical and can be locked in the connected position by a bayonet lock.

## Revendications

1. Dispositif pour mélanger des masses à plusieurs composants, en particulier dans le domaine dentaire, constitué par un dispositif de fourniture sous pression de composants pourvu d'une ouverture de sortie (16, 17) des composants et un mélangeur (11), dont les ouvertures d'entrée (18, 19), qui sont séparées par une cloison (30), peuvent être raccordées aux orifice de sortie (16, 17) du dispositif de fourniture sous pression, les ouvertures (16 à 19) de ces deux parties étant délimitées par des surfaces de guidage complémentaires (12, 13, 20, 21) des deux parties, les ouvertures (16 à 19) débouchant diamétralement dans des portions de surface se faisant face des surfaces de guidage (12, 13, 20, 21), **caractérisé en ce que** le mélangeur (11) est fermé vers l'arrière par un bouchon (28), dont la paroi latérale est ajustée à la forme de la chambre intérieure du pied du mélangeur et qui y est fixé par collage et qui comporte la cloison de séparation (30) des ouverture d'entrée (18, 19).

2. Dispositif selon la revendication 1, **caractérisé en ce que** la cloison de séparation (30) fait partie d'une garniture (28) insérable dans le mélangeur.

3. Dispositif selon la revendication 1 ou 2, **caractérisé en ce que** les surfaces de guidage (20, 21) du mélangeur (11) sont cylindriques et que l'axe médian des portions de surface coïncide avec l'axe médian du mélangeur (11).

4. Dispositif selon la revendication 1 ou 2, **caractérisé en ce que** les surfaces de guidage (12, 13, 20, 21) ont une direction d'introduction s'étendant transversalement à l'axe médian du mélangeur et sont assemblées par concordance de forme en direction de cet axe médian.

5. Dispositif selon la revendication 1 à 3, **caractérisé en ce que** les surfaces de guidage (12, 13, 20, 21) sont essentiellement cylindriques et peuvent être verrouillées dans la position assemblées par un verrou à baïonnette.
